# EUROPÄISCHE PATENTSCHRIFT

(11) **EP 3 527 432 B1**
(45) Veröffentlichungstag und Bekanntmachung des Hinweises auf die Patenterteilung: **10.11.2021**
(21) Anmeldenummer: 18157517.6
(22) Anmeldetag: 20.02.2018
(51) Int. Cl.: B60R 13/02, B29C 65/18, B29C 63/04

(54) **VERKLEIDUNGSBAUTEIL ZUM VERKLEIDEN EINES INNENRAUMS EINES PERSONENTRANSPORTMITTELS SOWIE VERFAHREN ZUM HERSTELLEN EINES DERARTIGEN VERKLEIDUNGSBAUTEILS**
LINING COMPONENT FOR LINING AN INTERIOR OF A PASSENGER TRANSPORT MEANS AND METHOD FOR THE PRODUCTION OF SUCH A LINING COMPONENT
COMPOSANT D'HABILLAGE DESTINÉ À HABILLER L'ESPACE INTÉRIEUR D'UN MOYEN DE TRANSPORT DE PERSONNES AINSI QUE PROCÉDÉ DE FABRICATION D'UN TEL COMPOSANT D'HABILLAGE

(43) Veröffentlichungstag der Anmeldung: 21.08.2019
(73) Patentinhaber: Motherson Innovations Company Limited, London EC3A 6AP (GB)
(72) Erfinder: Pignard, Pierre, 68320 Jebsheim (FR)
(74) Vertreter: Westphal, Mussgnug & Partner Patentanwälte mbB

(56) Entgegenhaltungen:
- DE-A1- 4 317 234
- DE-A1-102014 019 331
- JP-A- S59 201 814
- US-A- 5 139 604
- US-A- 5 718 791
- US-A- 5 925 207
- US-A1- 2015 321 400
- US-B2- 9 463 585

## Beschreibung

Die vorliegende Erfindung betrifft ein Verkleidungsbauteil zum Verkleiden eines Innenraums eines Personentransportmittels sowie ein Verfahren zum Herstellen eines derartigen Verkleidungsbauteils.

Das Personentransportmittel ist insbesondere als Fahrzeug ausgeführt, kann aber auch ein Schiff, ein Flugzeug, ein Zug oder dergleichen sein. Wenn im Folgenden die Erfindung in Bezug auf Fahrzeuge erläutert wird, gelten die Ausführungen gleichermaßen auch für andere Personentransportmittel wie Schiffe, Flugzeuge, Züge oder dergleichen.

In allen Ausgestaltungen des Personentransportmittels wird der Innenraum mehr oder weniger aufwendig verkleidet, um eine ansprechende Gestaltung des Innenraums bereitzustellen. Insbesondere bei Fahrzeugen spielt die Gestaltung des Innenraums eine große Rolle und ist ein wichtiges Kaufargument. Bei der Verkleidung des Innenraums werden Verkleidungsbauteile verwendet, die beispielsweise die Türen des Fahrzeugs von der Innenseite verkleiden. Die Verkleidungsbauteile können auch die Instrumententafel oder Kofferraum- oder Seitenverkleidungen bilden oder Teil hiervon sein.

Verkleidungsbauteile sind in vielen Fällen als ein flächiger Körper ausgestaltet, der eine ausreichende Steifigkeit aufweist, um den Belastungen, die im Betrieb des Fahrzeugs auftreten, standhalten zu können. Im Zuge der Bestrebungen, den Kraftstoff- oder Stromverbrauch der Fahrzeuge zu mindern, spielt die Gewichtsreduzierung eine wichtige Rolle. Wie bereits erwähnt, sind die Verkleidungsbauteile flächige Körper, die häufig nur eine geringe Wandstärke aufweisen. Um das Gewicht des Verkleidungsbauteils weiter zu reduzieren, wird sein Flächengewicht weiter reduziert. In diesem Zusammenhang werden zunehmend Hybrid-Leichtbauteile als Verkleidungsbauteile eingesetzt, bei denen verschiedene Materialien, beispielsweise Kunststoff, Metall, Mineral-, Glas-, Natur- und/oder Kohlefasern, verwendet werden. Die erforderliche Steifigkeit kann bei Hybrid-Leichtbauteilen mit sehr geringen Flächengewichten und folglich bei sehr geringem Gewicht erreicht werden. Insbesondere die Hybrid-Leichtbauteile, aber auch die herkömmlichen flächigen Verkleidungsbauteile, die beispielsweise thermoplastische, faserverstärkte Vliesstoffe oder Composite wie NFPP (naturfaserverstärktes Polypropylen) oder GFPP (glasfaserverstärktes Polypropylen) umfassen, weisen an den Kanten, die von den oben beschriebenen Abtrennflächen gebildet werden, eine geringe Stabilität auf. Insbesondere bei der Herstellung und beim Transport, aber auch im Betrieb kann es daher zu Beschädigungen oder zu einem Verzug kommen, so dass die Verkleidungsbauteile nicht mehr verwendet und/oder ausgetauscht werden müssen. Insofern spielt eine ausreichende Kantenstabilität eine wichtige Rolle.

Die Verkleidungsbauteile können aus Wirrvlies hergestellt sein, der aus verpressten Naturfasern besteht. Allerdings weisen die Verkleidungsbauteile häufig nicht die gewünschte Optik und/oder Haptik auf, so dass die Verkleidungsbauteile mit einer Dekorschicht versehen werden. Das Verkleidungsbauteil wird dabei so angeordnet, dass die Dekorschicht zum Innenraum hin zeigt.

Es sind mehrere Möglichkeiten bekannt, die Dekorschicht auf das Verkleidungsbauteil aufzubringen. Im Ausgangszustand liegt das Verkleidungsbauteil als eine Matte vor. Bevor die Matte weiterverarbeitet wird, muss sie zunächst kalibriert werden, um beispielsweise in ihr enthaltene Luft zu beseitigen. Hierzu wird die Matte erwärmt und gepresst. Um die kalibrierte Matte in die gewünschte Form zu bringen, wird es in ein geöffnetes Formwerkzeug eingelegt, welches ein Oberwerkzeug und ein Unterwerkzeug aufweist. Das Formwerkzeug wird dadurch geschlossen, dass das Oberwerkzeug und das Unterwerkzeug aufeinander zu bewegt werden, wodurch die kalibrierte Matte in die gewünschte Form gebracht und das Verkleidungsbauteil gebildet wird. Der Materialzuschnitt der kalibrierten Matte ist größer als das Verkleidungsbauteil in seiner fertiggestellten Geometrie. Das Oberwerkzeug und das Unterwerkzeug sind so ausgestaltet, dass sie die über die fertiggestellte Geometrie hinausgehenden Bereiche der kalibrierten Matte beim Schließen abtrennen. Diese Bereiche werden im Folgenden als Randstücke bezeichnet.

Es ist in den meisten Fällen ausreichend, das Verkleidungsbauteil nur auf der zum Innenraum hinzeigenden Seite mit der Dekorschicht zu versehen. Die Dekorschicht kann zusammen mit dem Verkleidungsbauteil in das Formwerkzeug eingelegt werden. Das Formwerkzeug kann die Dekorschicht mit der kalibrierten Matte verpressen und eine feste Verbindung schaffen. Die Dekorschicht kann vor dem Einlegen in das Formwerkzeug mit der kalibrierten Matte beispielsweise mittels einer Wärmebehandlung unter Ausbildung eines Stoffschlusses verbunden werden. Hierbei ist jedoch darauf zu achten, dass die verwendete Wärme schnell abgeführt werden kann, um das Dekor nicht zu beschädigen. Die auf den über die fertiggestellte Geometrie des Verkleidungsbauteils hinausgehenden Randstücken der kalibrierten Matte aufliegende Dekorschicht wird beim Schließen des Formwerkzeugs ebenfalls abgetrennt. Infolgedessen weist das Verkleidungsbauteil an der Abtrennfläche keine Dekorschicht auf, was optisch nachteilig sein kann, wenn die Abtrennfläche vom Innenraum her sichtbar ist. Zudem ist es häufig der Fall, dass die Dekorschicht einen anderen Wärmeausdehnungskoeffizient oder Schrumpfkoeffizient aufweist als das Verkleidungsbauteil. Es kann daher die Situation eintreten, dass sich die Dekorschicht insbesondere nach einer gewissen Alterung des betreffenden Verkleidungsbauteils zusammenzieht und den Bereich des Verkleidungsbauteils, der sich der Abtrennfläche anschließt, nicht mehr abdeckt, was optisch sehr nachteilig ist.

Um eine derartige Situation zu vermeiden, kann die Dekorschicht erst dann auf das Verkleidungsbauteil aufgebracht werden, wenn das Verkleidungsbauteil aus dem Formwerkzeug entnommen worden ist. Die Dekorschicht kann dann auch die Abtrennfläche umfassen und sogar bis zur Rückseite des Verkleidungsbauteils reichen, so dass ein Zusammenziehen keinen Einfluss auf die Optik des Innenraums hat. Allerdings ist hierfür ein weiterer Arbeitsgang notwendig, so dass die Bereitstellung des Verkleidungsbauteils verkompliziert und verteuert wird. Derartige Verkleidungsbauteile sind in der US 5,925,207 A, der JPS59-201814 A, der DE 43 17 234 A1, der US 5,139,604 A, der US 5, 718, 791 A, der US 2015/321400 A1, der US 9,463,585 B2 und der DE 10 2014 019 331 A1 offenbart. Verfahren zum Herstellen derartiger Verkleidungsbauteile sind aus der US 2015/321400 A1 und der US 9 463 585 B2 bekannt.

Aufgabe einer Ausführungsform der vorliegenden Erfindung ist es, ein Verkleidungsbauteil anzugeben, welches einfach zu fertigen ist, eine ausreichende Kantenstabilität sowie ein geringes Gewicht aufweist. Weiterhin liegt einer Ausführungsform der Erfindung die Aufgabe zugrunde, ein Verfahren zu schaffen, mit welchem ein Verkleidungsbauteil einfach gefertigt werden kann.

Diese Aufgabe wird mit den in den Ansprüchen 1 und 6 angegebenen Merkmalen gelöst. Vorteilhafte Ausführungsformen sind Gegenstand der Unteransprüche.

Eine Ausführungsform der Erfindung betrifft ein Verkleidungsbauteil zum Verkleiden eines Innenraums eines Personentransportmittels, insbesondere eines Fahrzeugs, wobei das Verkleidungsbauteil zumindest eine Abtrennfläche und zumindest einen sich der Abtrennfläche anschließenden Umbugabschnitt und zumindest einen Umbug aufweist, welcher zumindest einen umgebogenen Umbugabschnitt umfasst.

Im Folgenden soll unter einem Umbugabschnitt ein Abschnitt des Verkleidungsbauteils verstanden werden, welcher zur Ausbildung eines Umbugs gegenüber dem übrigen Verkleidungsbauteil umgebogen wird. Für sich genommen ist der Umbugabschnitt im Wesentlichen genauso aufgebaut wie das übrige Verkleidungsbauteil, erfährt jedoch durch das Umbiegen eine andere Ausrichtung gegenüber dem übrigen Verkleidungsbauteil. Der Umbugabschnitt umfasst daher eine Kante des Verkleidungsbauteils, die nach außen oder nach innen weisen kann. Weist die Kante nach außen, bildet die Kante den Rand des Verkleidungsbauteils. Weist die Kante nach innen, kann es sich hierbei beispielsweise um einen Ausschnitt des Verkleidungsbauteils handeln. Als Umbug soll die dreidimensionale Form verstanden werden, welche sich durch das Umbiegen zumindest eines Umbugabschnitts ergibt. Folglich umfasst der Umbug mindestens einen Umbugabschnitt.

Wie bereits erläutert, wird das Verkleidungsbauteil ausgehend von einer kalibrierten Matte durch Öffnen und Schließen des Formwerkzeugs in seine gewünschte Form gebracht. Dabei wird das Verkleidungsbauteil auf sein gewünschtes Maß beschnitten, so dass die bereits erwähnten Randstücke entstehen. Es kann auch notwendig sein, das Verkleidungsbauteil mit einem Durchbruch zu versehen. Auch der Durchbruch lässt sich durch das Schließen des entsprechend geformten Formwerkzeugs fertigen. In beiden Fällen entsteht eine Abtrennfläche, an welcher nicht mehr benötigtes Material vom Verkleidungsbauteil bzw. von der kalibrierten Matte getrennt wird. Folglich können die Umbugabschnitte nicht nur an den äußeren Enden oder Kanten, sondern auch im Inneren des Verkleidungsbauteils vorgesehen sein, beispielsweise dann, wenn das Verkleidungsbauteil einen Ausschnitt zum Durchführen eines benachbart angeordneten Bauteils aufweist. Dies ist insbesondere bei der Türinnenbetätigung (TIB) der Fall. Wenn das Verkleidungsbauteil an einem benachbarten Bauteil befestigt werden soll, kann es aus den im Folgenden näher erläuterten Gründen ebenfalls vorteilhaft sein, einen Umbug vorzusehen.

Ausgehend von einem im Wesentlichen ebenen Verkleidungsbauteil verläuft die Stirnfläche, insbesondere die Abtrennfläche, des Verkleidungsbauteils infolge des Umbiegens des Umbugabschnitts nicht mehr senkrecht zur Hauptebene des Verkleidungsbauteils, sondern schließt mit dieser einen Winkel ein. Die Steifigkeit des Verkleidungsbauteils im Umbug wird deutlich erhöht, so dass eine hohe Kantenstabilität erreicht wird. Aufgrund der erhöhten Steifigkeit kann das Verkleidungsbauteil mit einer geringeren Wandstärke ausgestaltet sein, so dass das Flächengewicht reduziert werden kann. Das Gewicht des Verkleidungsbauteils wird insgesamt reduziert. Zu beachten ist, dass die kalibrierte Matte um das Maß des Umbugabschnitts größer zugeschnitten werden muss, damit das Verkleidungsbauteil nach Bereitstellung des Umbugs die gewünschten Abmessungen aufweist. Erfindungsgemäß weist das Verkleidungsbauteil zumindest eine Sollknickstelle auf, welche den Umbugabschnitt gegenüber dem übrigen Verkleidungsbauteil begrenzt. Die Sollknickstelle kann insbesondere mittels einer Reduzierung der Wandstärke umgesetzt werden. Hierzu kann das Verkleidungsbauteil mit entsprechend verlaufenden Kerben oder Nuten versehen werden. Diese können beispielsweise dadurch hergestellt werden, dass das Oberwerkzeug und/oder das Unterwerkzeug entsprechend gestaltete Vorsprünge aufweist. Beim Schließen des Formwerkzeugs werden die Vorsprünge in die verformte Matte bzw. in das Verkleidungsbauteil eingepresst, wodurch die Sollknickstellen hergestellt werden. Mit den Sollknickstellen wird die Kraft, welche zum Umbiegen des Umbugabschnitts benötigt wird, reduziert. Die Wahrscheinlichkeit eines Bruchs des Verkleidungsbauteils wird minimiert.

Weiterhin bewirkt die Sollknickstelle, dass das Verkleidungsbauteil an der gewünschten Stelle umgebogen wird, so dass die Abweichungen zwischen verschiedenen Verkleidungsbauteilen in der Serienfertigung reduziert werden können. Darüber hinaus kann mit Tiefe und Form der Kerben und Nuten ein bestimmter Verlauf des Umbugabschnitts vorbestimmt werden. Da die Sollknickstelle die gewünschte Stelle vorgibt, wo das Verkleidungsbauteil umgebogen werden soll, begrenzt sie auch den Umbugabschnitt gegenüber dem übrigen Verkleidungsbauteil. Die Sollknickstelle kann auch als Sollbiegestelle bezeichnet werden.

Nach Maßgabe der Erfindung umfasst das Verkleidungsbauteil mindestens eine aufgebrachte Dekorschicht, welche im Umbugabschnitt umgebogen ist. In dieser Ausführungsform kann die Abtrennfläche durch ein entsprechendes Umbiegen so ausgerichtet werden, dass sie vom Innenraum aus nicht zu sehen ist. Dies kann dadurch erreicht werden, dass der Umbugabschnitt von der Seite, auf welcher die zum Innenraum hinweisende Dekorschicht angeordnet ist, weg gebogen wird. Insofern ist es nicht notwendig, die Abtrennfläche mit der Dekorschicht zu überziehen, wodurch die Herstellung des Verkleidungsbauteils vereinfacht werden kann. Die Optik des Innenraums bleibt hiervon unberührt. Vorschlagsgemäß kann die Dekorschicht vor dem Formen des Verkleidungsbauteils auf die Matte, sowohl auf die kalibrierte als auch auf die nicht kalibrierte Matte, aufgebracht werden. Ein zusätzlicher Schritt zum Verbinden der Dekorschicht mit dem Verkleidungsbauteil ist nicht notwendig.

Nach Maßgabe einer weiteren Ausführungsform bildet der Umbugabschnitt einen Umbugwinkel, welcher insbesondere 90° oder 180° beträgt. Diese Umbugwinkel lassen sich auf einfache Weise fertigen. Zudem kann bei einem Umbugwinkel von 90° die Abtrennfläche so ausgerichtet werden, dass sie vom Innenraum weg zeigt und nicht mehr zu sehen ist. Wie bereits erwähnt, wird hierzu der Umbugabschnitt weg von der Seite gebogen, auf welcher die Dekorschicht angeordnet ist. Infolgedessen wird die Abtrennfläche vom Umbugabschnitt verdeckt. Der Umbugwinkel kann mit einer entsprechenden Gestaltung der Sollknickstelle vorgegeben werden.

In einer weitergebildeten Ausführungsform kann der Umbugabschnitt einen Umbugwinkel von 180° bilden und der Umbugabschnitt zumindest teilweise auf der Seite am Verkleidungsbauteil anliegen, welche der Dekorschicht gegenüberliegt. Die Seite, welche der Dekorschicht gegenüberliegt, dient als Auflagefläche für den Umbugabschnitt, wodurch sich der Biegeprozess vereinfachen lässt. Weiterhin ist in dieser Ausführungsform das Verkleidungsbauteil vergleichbar mit einem Saum umgeschlagen. Hierdurch kann das Verkleidungsbauteil im Bereich des Umbugabschnitts zumindest abschnittsweise zweilagig ausgeführt werden, wodurch der Umbug eine deutlich erhöhte Steifigkeit bereitstellt.

Bei einer weitergebildeten Ausführungsform kann der Umbugabschnitt einen Hohlraum umschließen. Hierzu kann das Verkleidungsbauteil mit einer entsprechenden Anzahl von Sollbiegestellen oder Sollknickstellen versehen werden. Der Umbugabschnitt kann einen Vorsprung für das Verkleidungsbauteil mit wählbarer Größe bilden, wodurch flexibel auf die Einbausituation im Innenraum reagiert und die Optik des Innenraums gezielt verbessert werden kann. Zudem können mit der Dimensionierung des Hohlraums die Randdicke des Verkleidungsbauteils und die Steifigkeit im Umbug gezielt eingestellt werden.

Bei einer weiteren Ausführungsform kann das Verkleidungsbauteil Funktionselemente aufweisen. Funktionselemente können Positionierstifte, Schweißdome und ähnliches sein, mit denen das Verkleidungsbauteil an benachbart angeordneten Anbauteilen befestigt werden kann.

Eine Ausgestaltung der Erfindung betrifft ein Verfahren zum Herstellen eines Verkleidungsbauteils nach einem der zuvor erörterten Ausführungsformen, wobei das Verkleidungsbauteil zumindest einem Umbugabschnitt umfasst, umfassend folgende Schritte:
- Aufheizen und Einlegen einer kalibrierten Matte in ein Formwerkzeug mit einem Oberwerkzeug und einem Unterwerkzeug,
- Schließen des Formwerkzeugs durch Bewegen des Oberwerkzeugs und/oder des Unterwerkzeugs und Umformen der kalibrierten Matte zu einem Verkleidungsbauteil, und
- Bereitstellen zumindest eines Umbugs durch lokales Erwärmen des Verkleidungsbauteils und durch Umbiegen zumindest eines Umbugabschnitts.

Die technischen Effekte und Vorteile, die sich mit dem vorschlagsgemäßen Verfahren erreichen lassen, entsprechen denjenigen, die für das vorliegende Verkleidungsbauteil erörtert worden sind. Insbesondere sei darauf hingewiesen, dass mit dem Umbug die Kanten des Verkleidungsbauteils versteift werden können. Die Vorteile des Versteifens des Verkleidungsbauteils insbesondere im Bereich der Kanten sind unabhängig davon, ob auf dem Verkleidungsbauteil eine Dekorschicht aufgebracht ist oder nicht.

Wie eingangs erwähnt, wird die Matte vor dem Umformen zum Kalibrieren gepresst und kalibriert, worunter zu verstehen ist, dass seine Abmessungen bei einer bestimmten Temperatur festgelegt werden. Hierbei wird die Matte auf eine Kalibrierungstemperatur erwärmt.

Während die Matte kalibriert wird, wird sie auf eine Temperatur erwärmt, bei welcher das Umformen möglichst optimal erfolgen kann. Die auf die Umformtemperatur erwärmte kalibrierte Matte wird nun in das Formwerkzeug eingelegt und das Formwerkzeug geschlossen. Das Schließen des Formwerkzeugs bewirkt, dass die kalibrierte Matte zum Verkleidungsbauteil umgeformt wird.

Je nach Ausgestaltung des Formwerkzeugs kann der Umbug im Formwerkzeug bereitgestellt werden. Ist das Formwerkzeug nicht entsprechend ausgebildet, wird das Verkleidungsbauteil aus dem Formwerkzeug entnommen und der Umbug außerhalb des Formwerkzeugs hergestellt. Wenn das Verkleidungsbauteil aus dem Formwerkzeug entnommen werden soll, muss es auf eine bestimmte Temperatur abgekühlt sein, um eine Formänderung infolge des Öffnens des Formwerkzeugs und infolge des Auswerfens des Verkleidungsbauteils aus dem Formwerkzeug zu vermeiden. Daher muss das Verkleidungsbauteil erneut erwärmt werden, um den Umbug bereitstellen zu können. Allerdings ist es hierzu nicht notwendig oder gar nachteilig, wenn das gesamte Verkleidungsbauteil erwärmt wird. Vielmehr erfolgt nur eine lokale Erwärmung, worunter eine Erwärmung zu verstehen ist, mit welcher das Verkleidungsbauteil beispielsweise bis maximal 10 mm über die Stelle hinaus erwärmt wird, an der das Verkleidungsbauteil zum Bereitstellen des Umbugs umgebogen werden soll.

Bei einer entsprechenden Wahl des Materials für das Verkleidungsbauteil bewirkt das lokale Erwärmen, dass das Verkleidungsbauteil erweicht und das Umbiegen ermöglicht wird. Zudem wird die Wahrscheinlichkeit eines Bruchs des Verkleidungsbauteils verringert. Hierzu kann das Verkleidungsbauteil thermoplastische Materialien umfassen.

Erfindungsgemäß umfasst das Verfahren folgenden Schritt:
- Versehen des Verkleidungsbauteils mit zumindest einer Sollknickstelle beim Schließen des Formwerkzeugs, und
- Umbiegen zumindest eines der Umbugabschnitte unter Verwendung der zumindest einen Sollknickstelle derart, dass der Umbugabschnitt genauso aufgebaut ist wie das übrige Verkleidungsbauteil.

Die Sollknickstelle kann insbesondere mittels einer Reduzierung der Wandstärke umgesetzt werden. Hierzu kann das Verkleidungsbauteil mit entsprechend verlaufenden Kerben oder Nuten versehen werden. Diese können beispielsweise dadurch hergestellt werden, dass das Oberwerkzeug und/oder das Unterwerkzeug entsprechend gestaltete Vorsprünge aufweist. Beim Schließen des Formwerkzeugs werden die Vorsprünge in die verformte Matte bzw. in das Verkleidungsbauteil eingepresst, wodurch die Sollknickstellen hergestellt werden. Mit den Sollknickstellen wird die Kraft, welche zum Umbiegen des Umbugabschnitts benötigt wird, reduziert. Die Wahrscheinlichkeit eines Bruchs des Verkleidungsbauteils wird minimiert.

Weiterhin bewirkt die Sollknickstelle, dass das Verkleidungsbauteil an der gewünschten Stelle umgebogen wird, so dass die Abweichungen zwischen verschiedenen Verkleidungsbauteilen in der Serienfertigung reduziert werden können. Darüber hinaus kann mit Tiefe und Form der Kerben und Nuten ein bestimmter Verlauf des Umbugabschnitts vorbestimmt werden. Da die Sollknickstelle die gewünschte Stelle vorgibt, an der das Verkleidungsbauteil umgebogen werden soll, begrenzt sie auch den Umbugabschnitt gegenüber dem übrigen Verkleidungsbauteil. Die Sollknickstelle kann auch als Sollbiegestelle bezeichnet werden.

Eine weitergebildete Ausgestaltung zeichnet sich durch folgenden Schritt aus:
- Einlegen der kalibrierten Matte zusammen mit zumindest einer Dekorschicht in das Formwerkzeug.

In dieser Ausgestaltung wird die Dekorschicht beim Schließen des Formwerkzeugs mit dem Verkleidungsbauteil verpresst und am Verkleidungsbauteil befestigt, so dass kein weiterer Arbeitsgang zur Kaschierung oder zur Bauteil-Dekorierung notwendig ist. Es soll an dieser Stelle betont werden, dass sämtliche Umformschritte auch ohne die Dekorschicht durchgeführt werden können und die Dekorschicht nur in den Fällen zusammen mit der kalibrierten Matte in das Formwerkzeug eingelegt wird, wenn dies erforderlich oder erwünscht ist. Das Verkleidungsbauteil kann auch ohne die Dekorschicht in ein Personentransportmittel verbaut werden. Um dennoch einen optisch ansprechenden Eindruck des Innenraums bereitstellen zu können, kann die Sichtseite des Verkleidungsbauteils mit einer Struktur versehen werden, beispielsweise nach Art einer Verprägung. Die Struktur kann beispielsweise beim Kalibrieren der Matte oder beim Schließen des Formwerkzeugs erzeugt werden.

In einer weiteren Ausgestaltung des vorschlagsgemäßen Verfahrens, bei welchem die zumindest eine Dekorschicht auf einer ersten Seite des Verkleidungsbauteils aufliegt und eine gegenüberliegende zweite Seite keine Dekorschicht aufweist, kann das Verfahren folgende Schritte umfassen:
- Lokales Erwärmen des Verkleidungsbauteils auf der ersten Seite auf eine erste Temperatur,
- Lokales Erwärmen des Verkleidungsbauteils auf der zweiten Seite auf eine zweite Temperatur, wobei die erste Temperatur geringer ist als die zweite Temperatur oder gleich der zweiten Temperatur ist, wobei
- das Verkleidungsbauteil nach Entnahme aus dem Formwerkzeug erwärmt wird.

Die Erwärmung kann außerhalb des Formwerkzeugs und beispielsweise mittels Heißluft oder eines Infrarotstrahlers erfolgen. Die Wärmeenergie, welche auf die Dekorschicht einwirkt, ist geringer als die Wärmeenergie, die auf das Verkleidungsbauteil einwirkt. Die Dekorschicht wird daher vor Hitzeschäden geschützt, was insbesondere deshalb von Bedeutung ist, weil die Dekorschicht üblicherweise aus einem höherwertigen und häufig wärmeempfindlicheren Material besteht als das Verkleidungsbauteil. Zudem treten Hitzeschäden an der Dekorschicht optisch sofort in Erscheinung, was beim Verkleidungsbauteil nicht der Fall ist. Folglich kann das Verkleidungsbauteil ausreichend stark erwärmt werden, um es mit einer geringen Kraft umbiegen zu können, ohne dass die Gefahr von sichtbaren Hitzeschäden besteht. Wie bereits erwähnt, genügt es, das Verkleidungsbauteil nur lokal zu erwärmen, also beispielsweise maximal bis zu 10 mm über die Stelle hinaus, an welcher das Verkleidungsbauteil zum Bereitstellen des Umbugs umgebogen werden soll. Hierdurch wird die zur Bereitstellung des Umbugs benötigte Wärmeenergie gering gehalten und die Gefahr, dass sichtbare Hitzeschäden entstehen, verringert.

Wie bereits erwähnt, kann der Rand des Verkleidungsbauteils wegen der lokalen Trägerdoppelung versteift werden. Da der Saum plastisch verformt wird und der Umbugschieber eine Verformungsfunktion aufweist, ist es möglich, dem Rand eine besondere Form zu geben um ihn noch steifer zu gestalten oder um besondere Randfunktionen darzustellen.

Diese Art Saum kann bevorzugt beim Einsatz von leichten Matten-Flächengewichten benutzt werden (bevorzugt bei Flächengewichten kleiner als 1300g/m²), um Aufgrund des Einsatzes von leichten Materialien die labilen Kanten des Verkleidungsbauteils (zum Beispiel die Bauteilkanten einer Türseitenverkleidung zum Türinnenblech) zu stabilisieren bzw. zu versteifen. Diese Art Saum kann mit einen bereits dekorierter Bauteil dargestellt werden, aber auch bei einem Verkleidungsbauteil ohne Dekorschicht. Das Verkleidungsbauteil ohne die Dekorschicht mit einem derartigen Saum kann in einem weiteren Verfahrensschritt dekoriert werden. In dem Fall wirkt der Saum nicht als Umbug, sondern nur als Kantenversteifung.

Diese Art Saum oder Umbug ist insbesondere bei gepressten, bei gepressten und direkt hinterspritzten oder bei gepressten - direkt hinterspritzten - direktkaschierten Verkleidungsbauteilen anwendbar. Diese Vorgehensweise ist auf alle Verkleidungsbauteile anwendbar, die insbesondere aus thermoplastischen faserverstärkten Vliesstoffe oder Composite hergestellt werden (beispielsweise NFPP oder GFPP). Die Bindematrix des Trägermaterials ist bevorzugt Polypropylen (PP), allerdings kann jeder thermoplastischer Kunststoff verwendet werden, der sich in Form von Fasern herstellen lässt.

In einer fortgebildeten Ausgestaltung weist das Verfahren den folgenden Schritt auf:
- Anspritzen von Funktionselementen bei geschlossenem Formwerkzeug.

Funktionselemente können Positionierstifte, Schweißdome und ähnliches sein, mit denen das Verkleidungsbauteil an benachbart angeordneten Anbauteilen befestigt werden kann. Auch die Funktionselemente können in einem "one-shot-Verfahren" hergestellt werden, so dass das Herstellungsverfahren nicht nennenswert verlängert wird.

Beispielhafte Ausführungsformen der Erfindung werden im Folgenden unter Bezugnahme auf die beigefügten Zeichnungen näher erläutert. Es zeigen
- Figuren 1A bis 1H: die wesentlichen Schritte eines ersten Verfahrens zum Herstellen eines aus dem Stand der Technik bekannten ersten Verkleidungsbauteils,
- Figuren 2A und 2B: ausgewählte Schritte eines zweiten Verfahrens zum Herstellen eines aus dem Stand der Technik bekannten zweiten Verkleidungsbauteils,
- Figuren 3A bis 3H: die wesentlichen Schritte eines vorschlagsgemäßen ersten Verfahrens zum Herstellen eines erfindungsgemäßen ersten Verkleidungsbauteils, und
- Figuren 4A bis 4C: ausgewählte Schritte eines vorschlagsgemäßen zweiten Verfahrens zum Herstellen eines erfindungsgemäßen zweiten und dritten Verkleidungsbauteils, jeweils anhand von prinzipiellen Darstellungen.

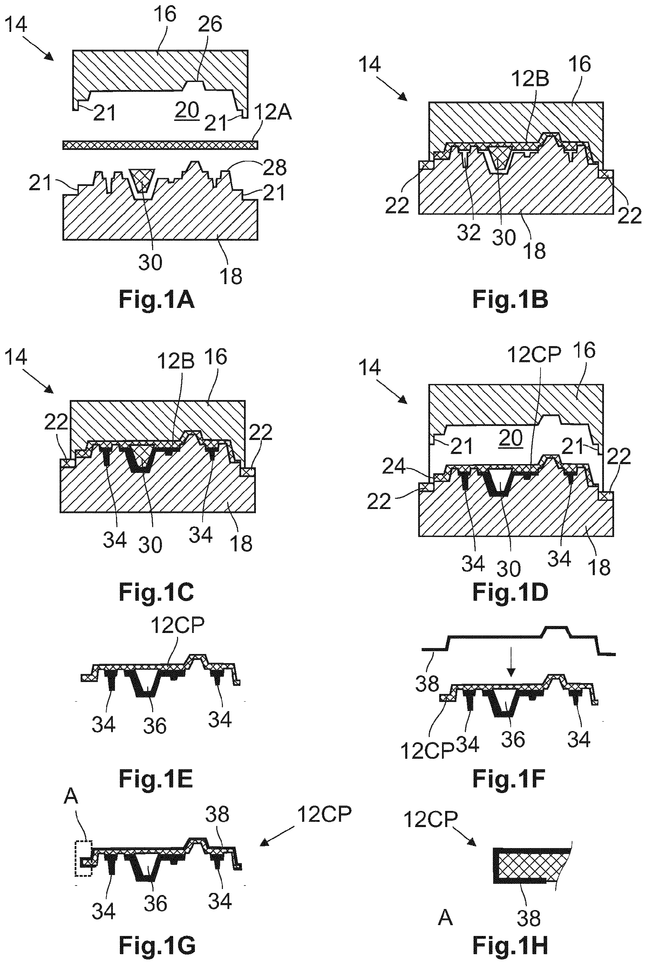

In den Figuren 1A bis 1H sind die wesentlichen Schritte eines ersten Verfahrens zum Herstellen eines aus dem Stand der Technik bekannten ersten Verkleidungsbauteils 12CP anhand von prinzipiellen Darstellungen gezeigt.

Das Verkleidungsbauteil 12CP (siehe Figuren 1E bis 1G) liegt im Ausgangszustand als eine Matte 12A vor, beispielsweise als eine Matte, insbesondere als eine Naturfasermatte. Die Matte 12A wird zunächst auf hier nicht näher gezeigte Weise kalibriert, aufgeheizt und, wie in Figur 1A gezeigt, in ein geöffnetes Formwerkzeug 14 eingelegt, welches ein Oberwerkzeug 16 und ein Unterwerkzeug 18 aufweist. Das Oberwerkzeug 16 und das Unterwerkzeug 18 können aufeinander zu und voneinander weg bewegt werden. Im geöffneten Zustand geben das Oberwerkzeug 16 und das Unterwerkzeug 18 einen Zwischenraum 20 frei, der so bemessen ist, dass die kalibrierte Matte 12A in das Formwerkzeug 14 eingelegt werden kann.

Das Oberwerkzeug 16 und das Unterwerkzeug 18 weisen jeweils Beschnittkanten 21 auf. Die kalibrierte Matte 12A ist im Ausgangszustand so bemessen, dass es nach außen über die Beschnittkanten 21, nicht aber über das Formwerkzeug 14 übersteht, wenn es in das Formwerkzeug 14 eingelegt ist.

Nachdem die kalibrierte Matte 12 A in das geöffnete Formwerkzeug 14 eingelegt worden ist, wird das Formwerkzeug 14 geschlossen, wie in Figur 1B dargestellt. Hierzu werden das Oberwerkzeug 16 und das Unterwerkzeug 18 aufeinander zu bewegt. Das Schließen des Formwerkzeugs 14 bewirkt, dass die kalibrierte Matte 12A zunächst zu einer umgeformten Matte 12B umgeformt wird. Dabei wirken die Beschnittkanten 21 so zusammen, dass sie beim Schließen Randstücke 22 von der kalibrierten Matte 12 A abtrennen. Die Flächen, die infolge des Abtrennens an kalibrierten Matte 12A bzw. der umgeformten Matte 12B entstehen, werden im Folgenden als Abtrennflächen 24 bezeichnet (siehe beispielsweise Figur 1D).

Das Oberwerkzeug 16 und das Unterwerkzeug 18 weisen Aussparungen 26 und Erhebungen 28 auf. Weiterhin weist das Formwerkzeug 14 Kerne oder Schieber 30 auf. Die kalibrierte Matte 12A passt sich dem Verlauf der Aussparungen 26 und Erhebungen 28 an, soweit die Aussparungen 26 so ausgestaltet sind, dass sie beim Schließen des Formwerkzeugs 14 in Kontakt mit der kalibrierten Matte 12A kommen. Einige der Aussparungen 26 des Unterwerkzeugs 18 sind so ausgestaltet, dass sie bei geschlossenem Formwerkzeug 14 eine Kavität 32 bilden. Der Schieber 30 kann in diese Kavität 32 eingebracht werden. Beim in Figur 1C dargestellten Schritt werden die Kavitäten 32 mit einem Spritzgussmaterial gefüllt, wodurch Funktionselemente 34 wie Positionierungs- und/oder Befestigungsabschnitte oder Rippen an die in Bezug auf die Figuren 1A bis 1H untere Seite der verformten Matte 12B angespritzt oder hinterspritzt werden. Nachdem die Funktionselemente 34 fertiggestellt sind, entsteht ein Verkleidungsbauteil 12CP.

Wie in Figur 1D gezeigt, wird das Formwerkzeug 14 anschließend geöffnet und der Schieber 30 zurückgezogen. Das Verkleidungsbauteil 12CP kann nun aus dem Formwerkzeug 14 entnommen werden. Die Randstücke 22 werden entsorgt oder wiederverwertet. In Figur 1E ist das Verkleidungsbauteil 12CP mit den angespritzten Funktionselementen 34 dargestellt. Dort, wo der Schieber 30 angeordnet war, weist das betreffende Funktionselement 34 einen hohlen Bereich 36 auf.

Anschließend wird eine Dekorschicht 38 auf die Seite des Verkleidungsbauteils 12CP aufgebracht, welche keine der Funktionselemente 34 aufweist, bezogen auf die Figuren 1A bis 1H auf die obere Seite. Die Dekorschicht 38 kann beispielsweise mit dem Verkleidungsbauteil 12CP verklebt werden. Wie aus Figur 1F zu erkennen ist, steht die Dekorschicht 38 seitlich über das Verkleidungsbauteil 12CP über. Hierdurch besteht die Möglichkeit, die Dekorschicht 38 nicht nur auf die obere Seite des Verkleidungsbauteils 12CP aufzubringen, sondern auch auf die Abtrennflächen 24 und auf einen Randbereich der unteren Seite. Dies ist aus den Figuren 1G und 1H ersichtlich, wobei Figur 1H eine vergrößerte Darstellung des in Figur 1G definierten Ausschnitts A zeigt. Hierdurch lassen sich folgende Vorteile erzielen: Zum einen werden die Abtrennflächen 24 von der Dekorschicht 38 überdeckt, so dass das Verkleidungsbauteil 12CP auch von der Seite aus gesehen dieselbe Optik aufweist wie die obere Seite. Hierdurch kann das Verkleidungsbauteil 12CP auch so in einem Innenraum eines Personentransportmittels eingebaut werden, dass es von der Seite sichtbar ist, ohne dass hierdurch der optische Eindruck des Innenraums gestört wird. Zum anderen kann die Dekorschicht 38 einen anderen Schrumpfkoeffizient aufweisen, was dazu führen kann, dass sich die Dekorschicht 38 im Vergleich zum Verkleidungsbauteil 12CP stärker zusammenzieht, so dass die Dekorschicht 38 ursprünglich bedeckte Oberflächenabschnitte des Verkleidungsbauteils 12CP wieder freigibt. Da sich die freigegebenen Oberflächenabschnitte in diesem Fall auf der unteren Seite des Verkleidungsbauteil 12CP befinden, sind diese vom Innenraum nicht sichtbar, so dass hierdurch die Optik nicht negativ beeinflusst wird.

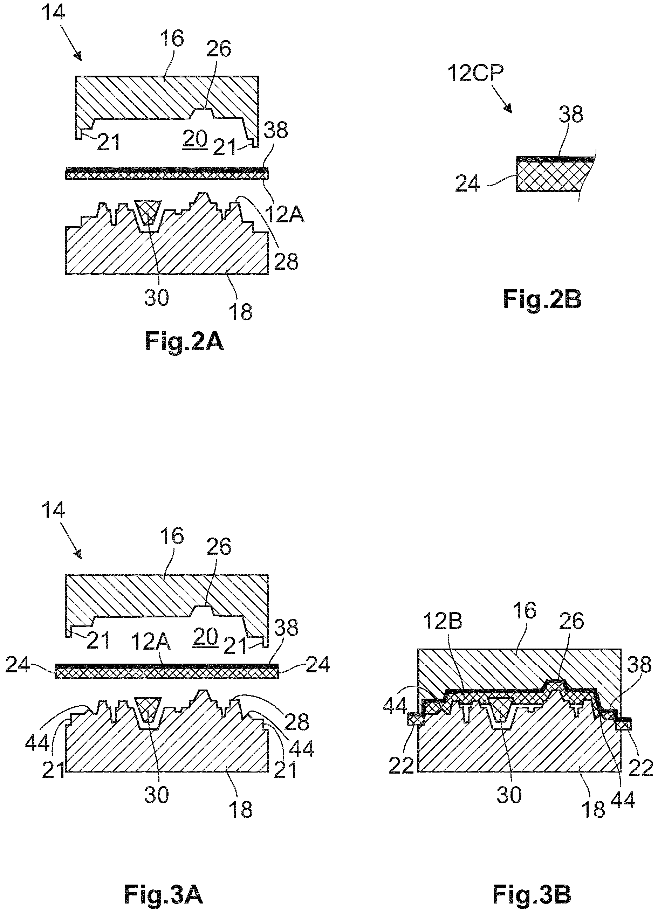

In den Figuren 2A und 2B sind ausgewählte Schritte eines zweiten Verfahrens zum Herstellen eines aus dem Stand der Technik bekannten zweiten Verkleidungsbauteils 12CP anhand von prinzipiellen Darstellungen gezeigt. Figur 2B zeigt entsprechend der Figur 1H einen vergrößerten Ausschnitt des zweiten Verkleidungsbauteils 12CP. Das Formwerkzeug 14 entspricht demjenigen, welches in den Figuren 1A bis 1D dargestellt ist.

Im Gegensatz zum ersten Verfahren wird beim zweiten Verfahren die Dekorschicht 38 zusammen mit dem zuvor aufgeheizten kalibrierten Matte 12A in das geöffnete Formwerkzeug 14 eingelegt. Die anschließenden Schritte entsprechen weitgehend denjenigen, die in den Figuren 1B bis 1D dargestellt worden sind. Die Dekorschicht 38 kann mit einem Schmelzkleber beschichtet sein oder selbst derartige Eigenschaften aufweisen, so dass während der Umformschritte die Dekorschicht 38 am Verkleidungsbauteil 12CP befestigt wird. Der beim Schließen des Formwerkzeugs 14 entstehende Druck und die Restwärme können ausreichen, die Dekorschicht 38 am Verkleidungsbauteil 12CP zu befestigen. Es ist dabei zu beachten, dass einerseits genügend Wärme zur Verfügung steht, um die Dekorschicht 38 am Verkleidungsbauteil 12CP zu befestigen und dass andererseits nicht zu viel Wärme in das Verkleidungsbauteil 12CP und die Dekorschicht 38 eingebracht wird, so dass die Dekorschicht 38 beschädigt wird. Es ist nicht notwendig, nach dem Öffnen des Formwerkzeugs 14 weitere Schritte zum Aufbringen der Dekorschicht 38 auf Verkleidungsbauteil 12CP auszuführen.

Wie zum ersten Verfahren erläutert, sind das Oberwerkzeug 16 und das Unterwerkzeug 18 so ausgeführt, dass sie beim Schließen unter Ausbildung der Abtrennflächen 24 die Randstücke 22 von der kalibrierten Matte 12A abtrennen. Da aber die Dekorschicht 38 bereits zusammen mit der kalibrierten Matte 12A in das geöffnete Formwerkzeug 14 eingelegt worden ist, ist es im Gegensatz zum ersten Verfahren nicht möglich, die Abtrennflächen 24 und die Randbereiche der unteren Seite mit der Dekorschicht 38 zu bedecken (siehe Figur 2B im Vergleich zu Figur 1H). Die mit der Abdeckung der Abtrennfläche 24 und der Randbereiche erzielbaren Vorteile sind mit dem zweiten Verfahren nicht oder nicht ohne weitere Schritte realisierbar.

Das auf diese Weise hergestellte Verkleidungsbauteil 12CP ist werkzeugfallend, was bedeutet, dass es nach der Entnahme aus dem Formwerkzeug 14 seine gewünschte Form aufweist und nicht mehr weiter bearbeitet werden muss. Ein derartiges Herstellungsverfahren wird auch als "one-shot-Verfahren" bezeichnet.

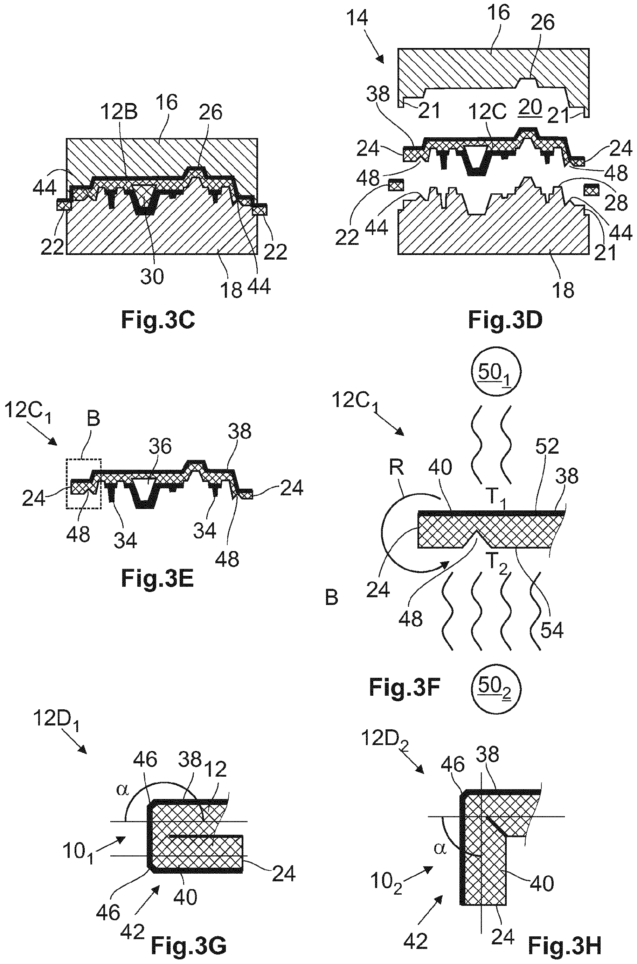

In den Figuren 3A bis 3F die wesentlichen Schritte eines erfindungsgemäßen Verfahrens gemäß einer ersten Ausführungsform zum Herstellen eines vorschlagsgemäßen Verkleidungsbauteils 12D₁ nach einem ersten Ausführungsbeispiel (siehe Figur 3G) und eines vorschlagsgemäßen Verkleidungsbauteils 12D₂ nach einem zweiten Ausführungsbeispiel (siehe Figur 3H) dargestellt.

Das Oberwerkzeug 16 entspricht demjenigen, welches in den Figuren 1A und 2A dargestellt ist. Allerdings weist das Unterwerkzeug 18 Vorsprünge 44 auf, welche dazu dienen, das Verkleidungsbauteil 12C₁ mit Sollknickstellen 48 zu versehen, auf die später noch genauer eingegangen wird.

Auch in diesem erfindungsgemäßen Ausführungsbeispiel wird die Dekorschicht 38 zusammen mit der kalibrierten Matte 12A in das geöffnete Formwerkzeug 14 eingelegt, so dass das vorschlagsgemäße Verkleidungsbauteil 12C₁ bei der Entnahme aus dem Formwerkzeug 14 demjenigen entsprechen kann, welches nach dem aus dem Stand der Technik bekannten zweiten Verfahren aus dem Formwerkzeug 14 entnommen wird. Folglich entsprechen die in den Figuren 3A bis 3D gezeigten Schritte im Wesentlichen denjenigen, die in den Figuren 1A bis 1D dargestellt sind. Figur 3E zeigt das Verkleidungsbauteil 12C₁ mit der darauf aufgebrachten Dekorschicht 38 nach der Entnahme aus dem Formwerkzeug 14. Es ist zu erkennen, dass das Verkleidungsbauteil 12C₁ zwei Sollknickstellen 48 aufweist, welche dadurch hergestellt werden, dass das Unterwerkzeug 18 entsprechend geformte Vorsprünge 44 aufweist.

Allerdings kann das Verkleidungsbauteil 12C₁ auch in Fällen verwendet werden, in denen keine Dekorschicht 38 notwendig ist. In diesem Fall kann die kalibrierte Matte 12A auch ohne die Dekorschicht 38 in das Formwerkzeug 14 eingelegt werden. Wie bereits erwähnt, werden beim Schließen des Formwerkzeugs 14 die Randstücke 22 von der kalibrierten Matte 12A abgetrennt (siehe insbesondere Figur 3D), so dass die Abtrennflächen 24 entstehen. Wie aus Figur 3F erkennbar, begrenzen die Abtrennflächen 24 einerseits und die Sollknickstellen 48 andererseits einen Umbugabschnitt 40. Die Figur 3F zeigt dabei prinzipiell den in Figur 3E definierten Ausschnitt B in vergrößerter Darstellung.

Nach der Entnahme aus dem Formwerkzeug 14 wird der Umbugabschnitt 40 unter Verwendung der Sollknickstellen 48 um einen bestimmten Umbugwinkel α in die in Figur 3F gekennzeichnete Richtung R umgebogen, so dass im Bereich zumindest eines Endes des Verkleidungsbauteils 12C₁ ein Umbug 42 entsteht (siehe Figuren 3G und 3H). Das den Umbug 42 aufweisende Verkleidungsbauteil ist mit 12D₁ bezeichnet, Insofern ist der Umbugabschnitt 40 der sich der Abtrennfläche 24 anschließende Abschnitt des Verkleidungsbauteil 12D₁, welcher beim Biegen relativ zum übrigen Verkleidungsbauteil 12C₁ bewegt wird. Aus den Figuren 3D und 3E ist zu erkennen, dass das Verkleidungsbauteil 12C₁ zumindest eine der bereits oben erwähnten Sollknickstellen 48 aufweist. Das Vorsehen der Sollknickstelle 48 vereinfacht das Umbiegen des Verkleidungsbauteils 12C₁ und das Bereitstellen des Umbugs 42. Zudem kann die Präzision des Umbugs 42 erhöht werden, da der Bereich, in welchem das Verkleidungsbauteil 12C₁ umgebogen werden soll, genauer festgelegt werden kann. Im dargestellten Ausführungsbeispiel begrenzen die Sollknickstellen 48 den Umbugabschnitt 40 zum Inneren des Verkleidungsbauteil 12C₁.

Bei dem in Figur 3G dargestellten ersten Ausführungsbeispiel des erfindungsgemäßen Verkleidungsbauteil 12D₁ beträgt der Umbugwinkel α 180°, so dass das Verkleidungsbauteil 12D₁ vergleichbar mit einem Saum umgeschlagen ist. Im Bereich des betreffenden Endes ist das Verkleidungsbauteil 12D₁ im Umbug 42 dann zweilagig ausgeführt, da der Umbugabschnitt 40 auf der unteren Seite des Verkleidungsbauteils 12D₁ aufliegt.

Bei dem in Figur 3H dargestellten zweiten Ausführungsbeispiel des erfindungsgemäßen Verkleidungsbauteil 12D₂ beträgt der Umbugwinkel α 90°. In diesem Fall liegt der Umbugabschnitt 40 nicht an der unteren Seite des Verkleidungsbauteil 12D₂ auf.

In beiden Fällen bewirkt das Vorsehen des Umbugs 42, dass die Verkleidungsbauteile 12D₁, 12D₂ von der Seite aus gesehen mit der Dekorschicht 38 versehen sind. Die Abtrennfläche 24, die auch beim vorschlagsgemäßen ersten Verkleidungsbauteil 12C₁ nicht von der Dekorschicht 38 bedeckt ist, wird durch das Umbiegen so ausgerichtet, dass sie von der Seite nicht mehr sichtbar ist. Weiterhin wird in beiden Fällen eine Verstärkung des Verkleidungsbauteile 12D₁, 12D₂ im Bereich des betreffenden Umbugs 42 bewirkt.

Wie in Figur 3F ersichtlich, kann das Verkleidungsbauteil 12C₁ nach der Entnahme aus dem Formwerkzeug 12 und vor dem Umbiegen des Umbugabschnitts 40 erwärmt werden. Hierzu sind eine erste Wärmequelle 50₁ und eine zweite Wärmequelle 50₂ vorgesehen, zwischen denen das Verkleidungsbauteil 12C₁ nach der Entnahme aus dem Formwerkzeug 14 positioniert werden kann. Die obere Seite des Verkleidungsbauteils 12C₁, auf welcher die Dekorschicht 38 aufliegt und der ersten Wärmequelle 50₁ zugewandt, wird im Folgenden als erste Seite 52 bezeichnet, während die gegenüberliegende untere Seite, die keine Dekorschicht 38 aufweist, als zweite Seite 54 bezeichnet wird. Die zweite Seite 54 ist der zweiten Wärmequelle 50₂ zugewandt. Die Wärmequellen 50₁, 50₂ können beispielsweise als Infrarotstrahler oder als Heißluftquelle ausgeführt sein. Aufgrund der Erwärmung des Verkleidungsbauteil 12C₁ wird dieses erweicht, so dass das Umbiegen erleichtert wird. Zudem wird die Gefahr eines Bruchs des Verkleidungsbauteil 12C₁ gemindert.

Aufgrund des Vorsehens der beiden Wärmequellen 50₁, 50₂ kann das Verkleidungsbauteil 12C₁ auf der ersten Seite 52 auf eine erste Temperatur T₁ und auf der zweiten Seite 54 auf eine zweite Temperatur T₂ erwärmt werden. Im dargestellten Ausführungsbeispiel werden die Wärmequellen 50₁, 50₂ so eingestellt, dass die erste Temperatur T₁ geringer ist als die zweite Temperatur T₂. Hierdurch wird insbesondere erreicht, dass die häufig temperaturempfindliche Dekorschicht 38 vor Hitzeschäden geschützt wird, gleichzeitig aber das Verkleidungsbauteil 12C₁ so weich wird, dass es ohne Bruch umgebogen werden kann.

Durch das Erwärmen vor dem Umbiegen des Umbugabschnitts 40 kann darüber hinaus erreicht werden, dass bei einen Umbugwinkel α von 180° der Umbugabschnitt 40 nicht nur an der zweiten Seite 54 des Verkleidungsbauteil 12D₁ anliegt, sondern auch mit der zweiten Seite 54 verschmelzt, wenn das Verkleidungsbauteil 12D₁ aus einem Material mit entsprechenden Eigenschaften besteht. Hierdurch wird das Verkleidungsbauteil 12D₁ im Bereich seiner Enden weiter verstärkt.

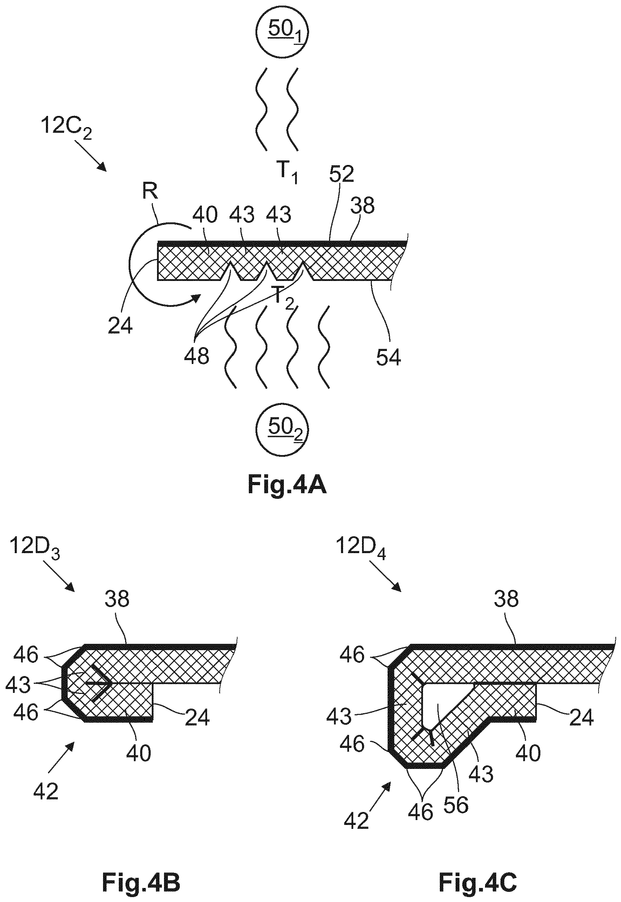

In Figur 4A ist eine zweite Ausführungsform des vorschlagsgemäßen Verfahrens dargestellt, bei dem Verkleidungsbauteil 12C₂ mehr als eine Sollknickstelle 48 im Bereich einer Kante aufweisen kann. Im dargestellten Ausführungsbeispiel weist das Verkleidungsbauteil 12C₂ drei Sollknickstellen 48 auf. Wie bereits erwähnt, wird der Umbugabschnitt 40 von der Abtrennfläche 24 und der benachbart angeordneten Sollknickstelle 48 begrenzt. Da aber das in Figur 4A dargestellte Verkleidungsbauteil 12C₂ drei Sollknickstellen 48 aufweist, begrenzen diese auch noch zwei weitere Umbugabschnitte 43 gegenüber dem übrigen Verkleidungsbauteil 12C₂. Hierdurch lassen sich der Biegeprozess gezielt beeinflussen und Umbuge 42 mit besonderen Geometrien herstellen.

In Figur 4B ist ein drittes Ausführungsbeispiel eines erfindungsgemäßen Verkleidungsbauteil 12D₃ dargestellt, welches drei Sollknickstellen 48 aufweist. Folglich sind ein Umbugabschnitt 40 und zwei weitere Umbugabschnitte 43 vorhanden. Insbesondere kann durch das Vorsehen von mehr als einer Sollknickstelle 48 erreicht werden, dass der dann entstehende Umbug 42 weitere Biegekanten 46 erhält. Der nicht gekennzeichnete Umbugwinkel α beträgt wie im ersten Ausführungsbeispiel 180°.

In Figur 4C ist ein viertes Ausführungsbeispiel eines erfindungsgemäßen Verkleidungsbauteils 12D₄ dargestellt. Durch das Vorsehen einer entsprechenden Anzahl von Sollknickstellen 48 und einer entsprechenden Prozessführung beim Umbiegen des Umbugabschnitts 40 und der beiden weiteren Umbugabschnitte 43 eist es auch möglich, den Umbug 42 so zu gestalten, dass er einen Hohlraum 56 umschließt, wodurch das Verkleidungsbauteil 12D₄ im Umbug 42 zusätzlich versteift wird. Der nicht gekennzeichnete Umbugwinkel α beträgt wie im ersten Ausführungsbeispiel 180°.

Sowohl im dritten Ausführungsbeispiel des Verkleidungsbauteils 12D₄ als auch im vierten Ausführungsbeispiel des Verkleidungsbauteils 12D₄ liegt der Umbugabschnitt 40 des Umbugs 42 auf dem Verkleidungsbauteil 12D₃, 12D₄ auf, so dass dort das Verkleidungsbauteil 12D₃ und 12D₄ zweilagig ausgeführt sind, wodurch die Steifigkeit zusätzlich erhöht wird.

### Bezugszeichenliste

- 12A: kalibrierte Matte
- 12B: umgeformte Matte
- 12C: Verkleidungsbauteil ohne Umbug
- 12D: Verkleidungsbauteil mit Umbug
- 12CP: Verkleidungsbauteil nach dem Stand der Technik
- 14: Formwerkzeug
- 16: Oberwerkzeug
- 18: Unterwerkzeug

- 20: Zwischenraum
- 21: Beschnittkanten
- 22: Randstück
- 24: Abtrennfläche
- 26: Aussparung
- 28: Vorsprung

- 30: Schieber
- 32: Kavität
- 34: Funktionselement
- 36: hohler Bereich
- 38: Dekorschicht

- 40: Umbugabschnitt
- 42: Umbug
- 43: weiterer Umbugabschnitt
- 44: Vorsprung
- 46: Biegekante
- 48: Sollknickstelle

- 50: Wärmequelle
- 52: erste Seite
- 54: zweite Seite
- 56: Hohlraum

- α: Umbugwinkel
- R: Richtung
- T₁: erste Temperatur
- T₂: zweite Temperatur

## Patentansprüche

1. Verkleidungsbauteil zum Verkleiden eines Innenraums eines Personentransportmittels, insbesondere eines Fahrzeugs, wobei das Verkleidungsbauteil (12D)
- zumindest eine Abtrennfläche (24) und zumindest einen sich der Abtrennfläche (24) anschließenden Umbugabschnitt (40), und
- zumindest einen Umbug (42) aufweist, welcher zumindest einen umgebogenen Umbugabschnitt (40), umfasst, **dadurch gekennzeichnet, dass**
- das Verkleidungsbauteil (12D) mindestens eine aufgebrachte Dekorschicht (38) umfasst, welche im Umbug (42) umgebogen ist,
- das Verkleidungsbauteil (12D) zumindest eine Sollknickstelle (48) aufweist, welche den Umbugabschnitt (40) gegenüber dem übrigen Verkleidungsbauteil (12D) begrenzt,
und
- der Umbugabschnitt (40) genauso aufgebaut ist wie das übrige Verkleidungsbauteil (12D).

2. Verkleidungsbauteil nach Anspruch 1,
**dadurch gekennzeichnet, dass** der Umbugabschnitt (40) einen Biegewinkel (α) bildet, welcher 90° oder 180° beträgt.

3. Verkleidungsbauteil nach Anspruch 1,
**dadurch gekennzeichnet, dass** der Umbugabschnitt (40) einen Biegewinkel (α) von 180° bildet und der Umbugabschnitt (40) zumindest teilweise auf der Seite am Verkleidungsbauteil (12D) anliegt, welche der Dekorschicht gegenüber liegt.

4. Verkleidungsbauteil nach einem der vorherigen Ansprüche,
**dadurch gekennzeichnet, dass** der Umbug (42) einen Hohlraum (56) umschließt.

5. Verkleidungsbauteil nach einem der vorherigen Ansprüche,
**dadurch gekennzeichnet, dass** das Verkleidungsbauteil (12D) Funktionselemente (34) aufweist.

6. Verfahren zum Herstellen eines Verkleidungsbauteils nach einem der vorherigen Ansprüche, wobei das Verkleidungsbauteil (12D) mit zumindest einem Umbugabschnitt (40) umfasst, umfassend folgende Schritte:
- Aufheizen und Einlegen einer kalibrierten Matte (12A) in ein Formwerkzeug (14) mit einem Oberwerkzeug (16) und einem Unterwerkzeug (18),
- Schließen des Formwerkzeugs (14) durch Bewegen des Oberwerkzeugs (16) und/oder des Unterwerkzeugs (18) und Umformen der kalibrierten Matte (12A) zu einem Verkleidungsbauteil (12D), und
- Bereitstellen zumindest eines Umbugs (42) durch Erwärmen des Verkleidungsbauteils (12D) und durch Umbiegen zumindest eines Umbugabschnitts (40),
- Versehen des Verkleidungsbauteils (12D) mit zumindest einer Sollknickstelle (48) beim Schließen des Formwerkzeugs (14), und
- Umbiegen zumindest eines der Umbugabschnitte (40, 43) unter Verwendung der zumindest einen Sollknickstelle (48) derart, dass der Umbugabschnitt (40) genauso aufgebaut ist wie das übrige Verkleidungsbauteil (12D).

7. Verfahren nach Anspruch 6, weiterhin umfassend den folgenden Schritt:
- Einlegen der kalibrierten Matte (12A) zusammen mit zumindest einer Dekorschicht (38) in das Formwerkzeug (14) .

8. Verfahren nach Anspruch 7, wobei die zumindest eine Dekorschicht (38) auf einer ersten Seite (52) des Verkleidungsbauteils (12D) aufliegt und eine gegenüberliegende zweite Seite (54) keine Dekorschicht (38) aufweist, weiterhin umfassend folgende Schritte:
- Lokales Erwärmen des Verkleidungsbauteils (12D) auf der ersten Seite (52) auf eine erste Temperatur (T₁), und
- Lokales Erwärmen des Verkleidungsbauteils (12D) auf der zweiten Seite (54) auf eine zweite Temperatur (T₂), wobei die erste Temperatur (T₁) geringer ist als die zweite Temperatur (T₂) oder gleich der zweiten Temperatur (T₂) ist, wobei
- das Verkleidungsbauteil (12D) nach Entnahme aus dem Formwerkzeug (14) erwärmt wird.

9. Verfahren nach einem der Ansprüche 6 bis 8, **gekennzeichnet durch** folgenden Schritt:
- Anspritzen von Funktionselementen (34) bei geschlossenem Formwerkzeug (14) an das Verkleidungsbauteil (12D).

## Claims

1. Lining component for lining the interior of a passenger transportation means, in particular that of a motor vehicle, wherein the lining component (12D) comprises
- at least one separating surface (24) and at least one bending segment (40) which joins with the separating surface (24), and
- at least one bending (42) which includes at least one bent bending segment (40), **characterized in that**
- the lining component (12D) includes at least one applied decorative layer (38) which is bent in the bending (42),
- the lining component (12D) comprises at least one predetermined bending point (48) which delimits the bending segment (40) from the rest of the lining component (12D), and
- the bending segment (40) is constructed identically to the rest of the lining component (12D).

2. Lining component in accordance with claim 1
**characterized in that** the bending segment (40) forms a bending angle (α) which is of 90° or 180°.

3. Lining component in accordance with claim 1,
**characterized in that** the bending segment (40) forms a bending angle (α) of 180° and **in that** the bending segment (40) is at least partly arranged on the side of the lining component (12D) which lies opposite the decorative layer.

4. Lining component in accordance with any of the preceding claims,
**characterized in that** the bending (42) encompasses a hollow space (56).

5. Lining component in accordance with any of the preceding claims,
**characterized in that** the lining component (12D) comprises functional elements (34).

6. Method for producing a lining component in accordance with any of the preceding claims, wherein the lining component (12D) comprises at least one bending segment (40), the method comprising the following steps:
- heating and placing a calibrated mat (12A) into a molding tool (14) which has an upper tool (16) and a lower tool (18),
- closing the molding tool (14) by moving the upper tool (16) and/or the lower tool (18) and reshaping the calibrated mat (12A) into a lining component (12D), and
- providing at least one bending (42) by heating the lining component (12D) and by bending at least one bending segment (40),
- applying at least one predetermined bending point (48) during the closing of the molding tool (14), and
- bending at least one of the bending segments (40, 43) while making use of the at least one predetermined bending point (48) such that the bending segment (40) is constructed exactly identical to the rest of the lining component (12D).

7. Method in accordance with claim 6, further comprising the following steps:
- placing the calibrated mat (12A) into the molding tool (14) together with a decorative layer (38).

8. Method in accordance with claim 7, wherein the at least one decorative layer (38) lies on a first side (52) of the lining component (12D) and an oppositely disposed second side (54) of the lining component (54) does not comprise a decorative layer (38), further comprising the following steps:
- localized heating of the lining component (12D) on the first side (52) to a first temperature (T₁), and
- localized heating of the lining component (12D) on the second side (54) to a second temperature (T₂), wherein the first temperature (T₁) is lower than the second temperature (T₂) or is the same as the second temperature (T₂), wherein
- the lining component (12D) is heating after removal from the molding tool (14).

9. Method in accordance with any of claims 6 to 8, **characterized by** the following steps:
- Injection molding of functional elements (34) onto the lining component (12D) when the molding tool (14) is closed.

## Revendications

1. Composant d'habillage pour habiller l'espace intérieur d'un moyen de transport de personnes notamment d'un véhicule,
le composant d'habillage (12D) comprenant :
- au moins une surface de séparation (24) et au moins un segment à replier (40) adjacent à la surface de séparation (24), et
- au moins un repli (42) qui a au moins un segment de repli (40) replié,
**caractérisé en ce que**
- le composant d'habillage (12D) comporte au moins une couche de décoration (38), appliquée qui est repliée avec le repli (42),
- le composant d'habillage (12D) a au moins un point de pliage de consigne (48) qui délimite le segment à replier (40) par rapport au restant du composant d'habillage (12D), et
- le segment à replier (40) est réalisé exactement comme le restant du composant d'habillage (12D).

2. Composant d'habillage selon la revendication 1,
**caractérisé en ce que**
le segment à replier (40) forme un angle de pliage (α) qui est de 90° ou 180°.

3. Composant d'habillage selon la revendication 1,
**caractérisé en ce que**
le segment à replier (40) forme un angle de pliage (α) de 180° et le segment à replier (40) s'applique au moins en partie sur le côté du composant d'habillage (12D) qui est en regard de la couche de décoration.

4. Composant d'habillage selon l'une des revendications précédentes,
**caractérisé en ce que**
le repli (42) entoure une cavité (56).

5. Composant d'habillage selon l'une des revendications précédentes,
**caractérisé en ce que**
le composant d'habillage (12D) comprend des éléments fonctionnels (34).

6. Procédé de réalisation d'un composant d'habillage selon l'une des revendications précédentes,
le composant d'habillage (12D) comprenant au moins un segment à replier (40), procédé comprenant les étapes suivantes consistant à :
- chauffer et placer une nappe calibrée (12A) dans un outil de formage (14) ayant un outil haut (16) et/ou un outil bas (18),
- fermer l'outil de formage (14) en déplaçant l'outil haut (16) et /ou l'outil bas (18) et en transformant la nappe calibrée (12A) en un composant d'habillage (12D), et
- réaliser au moins un repli (42) par chauffage du composant d'habillage (12D) et repliage d'au moins d'un segment à replier (40),
- munir le composant d'habillage (12D) d'au moins un point de pliage de consigne (48) en fermant l'outil de formage (14), et
- replier au moins le segment à replier (40, 43) en utilisant au moins un point de pliage de consigne (48) de façon que le segment à replier (40) soit réalisé exactement comme le restant du composant d'habillage (12D).

7. Procédé selon la revendication 6,
comprenant en outre l'étape suivante consistant à :
- placer la nappe calibrée (12A) avec au moins une couche de décoration (38) dans l'outil de formage (14).

8. Procédé selon la revendication 7,
selon lequel
au moins la couche de décoration (38) est appliquée sur un premier côté (52) du composant d'habillage (12D) et un second côté (54) opposé n'a pas de couche de décoration (38),
procédé comprenant en outre les étapes suivantes consistant à :
- chauffer localement la première face (52) du composant d'habillage (12D) à une première température (T1), et
- chauffer localement sur le second côté (54) du composant d'habillage (12D) à une seconde température (T2), la première température (T1) étant inférieure à la seconde température (T2) ou égale à la seconde température (T2),
* chauffer le composant d'habillage (12D) après enlèvement de l'outil de formage (14).

9. Procédé selon l'une des revendications 6 à 8,
**caractérisé par** l'étape suivante consistant à :
- injecter des éléments fonctionnels (34) sur le composant d'habillage (12D) lorsque l'outil de formage (14) est fermé.
